# EUROPEAN PATENT APPLICATION

(11) **EP 1 990 670 A1**
(43) Date of publication of application: **12.11.2008**
(21) Application number: 08008538.4
(22) Date of filing: 06.05.2008
(51) Int. Cl.: G02B 26/08

(54) **Variable shape mirror and optical pickup device**

(30) Priority: 09.05.2007 JP 2007124709
(71) Applicant: Funai Electric Co., Ltd., Daito-shi, Osaka 574-0031 (JP); The Ritsumeikan Trust, Nakagyo-ku Kyoto-shi Kyoto 604-8415 (JP)
(72) Inventor: Tanaka, Fuminori, Daito-shi, Osaka 574-0013 (JP); Maeda, Shigeo, Daito-shi, Osaka 574-0013 (JP); Tanaka, Katsuhiko, 1-1-1, Noji-higashi, Kusatsu-shi Shiga 525-8577 (JP); Ishii, Akira, 1-1-1, Noji-higashi, Kusatsu-shi Shiga 525-8577 (JP); Sugiyama, Susumu, 1-1-1, Noji-higashi, Kusatsu-shi Shiga 525-8577 (JP)
(74) Representative: Grünecker, Kinkeldey, Stockmair & Schwanhäusser Anwaltssozietät

(57) **Abstract**

In a variable shape mirror (1) including a base substrate (2); a mirror (3) with a mirror surface (3a); a fixed part (4), arranged on the base substrate (2), for fixing the mirror (3) and the base substrate (2); and an actuator (7) using a piezoelectric ceramics arranged between the base substrate (2) and the mirror (3); an initial voltage of the actuator (7) is a negative voltage. The initial voltage differs for each actuator (7); and is larger than or equal to a voltage at which a displacement of the actuator (7) becomes minimum and smaller than zero voltage. The negative initial voltage is a bias voltage, and a voltage stroke is performed while applying the bias voltage.

## Description

### BACKGROUND OF THE INVENTION

### 1. Field of the Invention

The present invention relates to a variable shape mirror and an optical pickup device using the variable shape mirror, more specifically, to a variable shape mirror in which the strain of the mirror is reduced and an optical pickup device.

### 2. Description of the Related Art

Optical components such as lens and mirror of a camera, a microscope, an optical pickup device etc. and a drive mechanism are commonly integrated utilizing superiority such as miniaturization and low power consumption of the MEMS (Micro Electro Mechanical Systems) using the IC technique.
For instance, when an actuator using a piezoelectric ceramics is combined with a mirror by using MEMS, the mirror can be deformed based on the displacement of the actuator. The wavefront aberration such as coma aberration of the optical pickup device can be corrected by using such variable shape mirror as a raising mirror of the optical pickup device.

Japanese Laid-Open Patent Publication No. 2005-57250 proposes an actuator device applicable to a display device, a light modulator, a variable capacitor, and the like, where the actuator device includes a plate member, which is to be transmitted with a drive force of a plurality of actuators, arranged on a drive unit in which the plurality of actuators are arrayed two-dimensionally, so that the displacement of a defective actuator is compensated with the displacement of a plurality of normal actuators.
In the actuator device, an applied voltage in a case of polarizing a piezoelectric layer is larger than a voltage in a case of curing an adhesive, and the displacement characteristic of the actuator matches the characteristic curve in the actual drive.

Japanese Laid-Open Patent Publication No. 2005-92987 proposes a variable shape mirror including a pair of electrodes having different polarizing directions arranged substantially symmetric to the optical axis, a piezoelectric body arranged so as to be sandwiched by the electrodes, and an optical reflection film, where the mirror is an aberration correction mirror to change the shape of the optical reflection film with the piezoelectric body and correct the spherical aberration of the mirror. Since the directions of the polarization process is opposite in the aberration correction mirror, the piezoelectric body is convex downward at one region and convex upward in another region.

Japanese Laid-Open Patent Publication No. 2006-351156 proposes a variable shape mirror for deforming a mirror finished surface by a piezoelectric element sandwiched between a supporting substrate and a mirror with the mirror finished surface, where the variable shape mirror is configured such that a joining part of the supporting substrate and the piezoelectric element and a joining part of the piezoelectric element and the mirror include a metal thin layer, and the joining parts including the metal thin layer are bonded in a heating state with pressure, so that the joining degree of the joining parts is increased by intervention of the metal layer.

Japanese Laid-Open Patent Publication No. 2006-351154 proposes a variable shape mirror including a mirror with a mirror finished surface to be irradiated with a light beam on a surface opposite to the supporting substrate, and a piezoelectric element sandwiched by the supporting substrate and the mirror, where the variable shape mirror is capable of correcting the aberration without being influenced by strain generated at the mirror finished surface by a predetermined arrangement of the piezoelectric element.

### SUMMARY OF THE INVENTION

In the actuator device disclosed in Japanese Laid-Open Patent Publication No. 2005-57250, although the applied voltage when performing the polarization process is higher than the voltage in time of curing the adhesive and in time of driving, a residual strain of the piezoelectric ceramics is large at such voltage application.
That is, the polarization process needs to be performed again if a process that requires a temperature of higher than or equal to a curie point (temperature at which intrinsic polarization of the piezoelectric body disappears) is performed again after the assembly of the actuator is terminated, but the residual strain is already generated when the polarization is terminated even if the polarization is performed in consideration of hysteresis, and thus the residual strain is not reduced.

Thus, it is an original characteristic of the piezoelectric body such as PZT that the residual strain is generated when the polarization is performed. Since the residual strain always exists when the polarization is performed, the initial displacement of the actuator differs between immediately after assembly (before polarization) and after polarization, and a strain is generated in the vicinity of a drive unit of the actuator by the residual strain of the actuator.
In Japanese Laid-Open Patent Publication No. 2005-57250, the drive voltages of a plurality of actuators are all the same, and variation between the actuators is not taken into consideration.

In the aberration correction mirror disclosed in Japanese Laid-Open Patent Publication No. 2005-92987, the polarizing directions are opposite. In this case, when a voltage is applied to the piezoelectric body, the portion that is convex downward and the portion that is convex upward are formed in an aim of increasing the displacement of the optical reflection film at low voltage, and thus correction of the residual strain is not addressed.
Forming the portion that is convex downward and the portion that is convex upward in the piezoelectric body may cause an adverse affect in terms of reducing the influence of the residual strain and obtaining a variable shape mirror of high planarity.

The variable shape mirror of Japanese Laid-Open Patent Publication No. 2006-351156 and Japanese Laid-Open Patent Publication No. 2006-351154 is proposed by the same applicants as the applicants of the present invention. In the variable shape mirror of Japanese Laid-Open Patent Publication No. 2006-351156, a metal layer is formed at the joining part to increase the joining degree at the joining part of the supporting substrate and the piezoelectric element and the joining part of the piezoelectric element and the mirror, but reduction of the residual strain of the piezoelectric actuator is not addressed.

The variable shape mirror disclosed in Japanese Laid-Open Patent Publication No. 2006-351154 reduces the strain of the mirror by arranging the piezoelectric actuator in a predetermined manner, but does not reduce the residual strain by changing the applied voltage of the actuator.

In view of the above, it is an object of the present invention to provide a variable shape mirror in which the strain, in particular, the residual strain of the piezoelectric actuator in the initial state is reduced, and an optical pickup device using the variable shape mirror.

The present invention employs the following technical means to achieve the above object.
A variable shape mirror according to the present invention includes a base substrate; a mirror with a mirror surface; a fixed part, arranged on the base substrate, for fixing the mirror and the base substrate; and an actuator using a piezoelectric ceramics arranged between the base substrate and the mirror; wherein an initial voltage of the actuator is a negative voltage.

Accordingly, even if a process that requires a temperature of higher than or equal to a curie point is performed after the termination of an assembly process of an actuator using a piezoelectric ceramics, and the polarization process is again performed on the actuator thereby generating the residual strain, the actuator is contracted by applying the negative voltage at the initial state. Thus, the contraction by the negative initial voltage and the residual strain of the piezoelectric ceramics cancel out, thereby reducing the residual strain.
Since the actuator uses the piezoelectric ceramics such as PZT, the residual strain of the piezoelectric ceramics is inevitable if polarization is performed, but in the case where the initial voltage of the actuator is a negative voltage as described above, the variable shape mirror is projected upward from the beginning due to the residual strain of the piezoelectric ceramics, and thus a state of being upwardly convex can be reduced.

In the variable shape mirror according to the present invention, the initial voltage may differ for each actuator.
The variation among the actuators is thereby reduced, and planarity of the mirror in the initial state is further enhanced.

In the variable shape mirror according to the present invention, the initial voltage may be larger than or equal to a voltage at which the displacement of the actuator becomes a minimum displacement and smaller than zero voltage.
The piezoelectric ceramics used in the actuator has a butterfly hysteresis characteristic. That is, the actuator displaces in the negative direction (contracting direction) when the applied voltage is lowered from zero, but if the applied voltage is further lowered to lower than the applied voltage at the minimum displacement of the butterfly hysteresis, the direction of displacement changes. The actuator then displaces in the positive direction (extending direction) as the applied voltage is lowered.

Thus, when the negative initial voltage is too low and becomes lower than the voltage corresponding to the minimum displacement of the butterfly hysteresis, the relationship between the applied voltage and the displacement does not have linearity. Therefore, if the initial voltage is larger than or equal to the voltage at which the displacement of the actuator becomes minimum and smaller than zero voltage, the portion where the relationship between the applied voltage and the displacement is substantially linear can be used, and thus the relationship between the applied voltage and the variable shape mirror is also substantially linear, thereby the shape of the variable shape mirror can be easily changed.

In the variable shape mirror according to the present invention, the negative initial voltage may be a bias voltage, and the voltage stroke may be performed while applying the bias voltage.
If the applied voltage is changed while applying the negative bias voltage and the voltage stroke is performed in a range where the relationship between the applied voltage and the displacement is substantially linear, the residual strain is also reduced in a voltage applied state.

That is, since the applied voltage is changed to positive while applying the negative bias voltage, the displacement of the actuator is always lower by the negative bias, and the actuator can be displaced with the residual strain reduced.
No change is required other than that the initial voltage is a negative bias applied voltage, and a substantially linear displacement same as when the bias voltage is zero can be obtained.
A simple configuration of the power supply circuit for the applied voltage can be achieved since the negative bias voltage is merely applied.

A variable shape mirror according to a typical embodiment of the present invention includes a base substrate; a mirror with a mirror surface; a fixed part, arranged on the base substrate, for fixing the mirror and the base substrate; and an actuator using a piezoelectric ceramics arranged between the base substrate and the mirror; wherein PZT is used for the piezoelectric ceramics; polarization of the PZT is performed after an assembly process of the variable shape mirror; an initial voltage of the actuator is a negative voltage; the initial voltage differs for each actuator; the initial voltage is larger than or equal to a voltage at which a displacement of the actuator becomes minimum and smaller than zero voltage; and the negative initial voltage is a bias voltage, and the voltage stroke is performed while applying the bias voltage.

Accordingly, even if a process that requires a temperature of higher than or equal to a curie point is performed after the termination of an assembly process of an actuator using PZT, and thereafter, the polarization process is again performed on the actuator thereby generating the residual strain, the residual strain can be reduced since the negative initial voltage is applied to the actuator in a direction of canceling out the residual strain in the initial state. Thus, an upwardly convex state in which the variable shape mirror projects upward from the beginning is reduced. If the voltage to be applied between the actuators differs, variation among the actuators can be reduced and the mirror can be further planarized.
Moreover, if the initial voltage is in a range not exceeding the minimum displacement of the actuator, the portion where the relationship between the applied voltage and the displacement is substantially linear can be used.

If the applied voltage is changed to perform the voltage stroke while applying the negative initial voltage as the bias voltage, the displacement of the actuator always becomes lower by the negative bias than when the bias voltage is zero, whereby the residual strain is reduced by the displacement due to the negative bias.
For instance, if the range of the voltage stroke which is the amount of change in the applied voltage when the bias voltage is zero and the range of the voltage stroke when the negative bias voltage is applied are the same, the actuator is contracted, under applying the negative bias voltage, by the negative bias than when the bias voltage is zero even if maximum voltage is applied, whereby the residual strain can be reduced by the relevant amount.

The optical pickup device according to the present invention is provided with the above-described variable shape mirror.
Accordingly, in the initial state of the variable shape mirror, a state of being projected upward by the residual strain of the piezoelectric ceramics is reduced at the initial state of the variable shape mirror, and thus the aberration of the initial state is reduced, and the accuracy of aberration correction is further enhanced.

According to the present invention, a variable shape mirror in which the strain, in particular, the residual strain of a piezoelectric actuator in the initial state is reduced, and an optical pickup device using the variable shape mirror are obtained.

### BRIEF DESCRIPTION OF THE DRAWINGS

Fig. 1 is a perspective view of a variable shape mirror of the present embodiment;
Fig. 2 is a cross sectional view showing a state in which the variable shape mirror of the present embodiment is deformed;
Fig. 3 is a top view of a stacked type piezoelectric ceramics actuator;
Fig. 4 is a cross sectional view of the stacked type piezoelectric ceramics actuator;
Fig. 5 is a view showing polarization of a piezoelectric ceramics;
Fig. 6 is a view showing a voltage application method of the present embodiment; and
Fig. 7 is a view showing an optical pickup device using the variable shape mirror of the present embodiment.

### DETAILED DESCRIPTION OF THE PREFERRED EMBODIMENTS

The embodiment of the present invention will now be described with reference to the drawings.

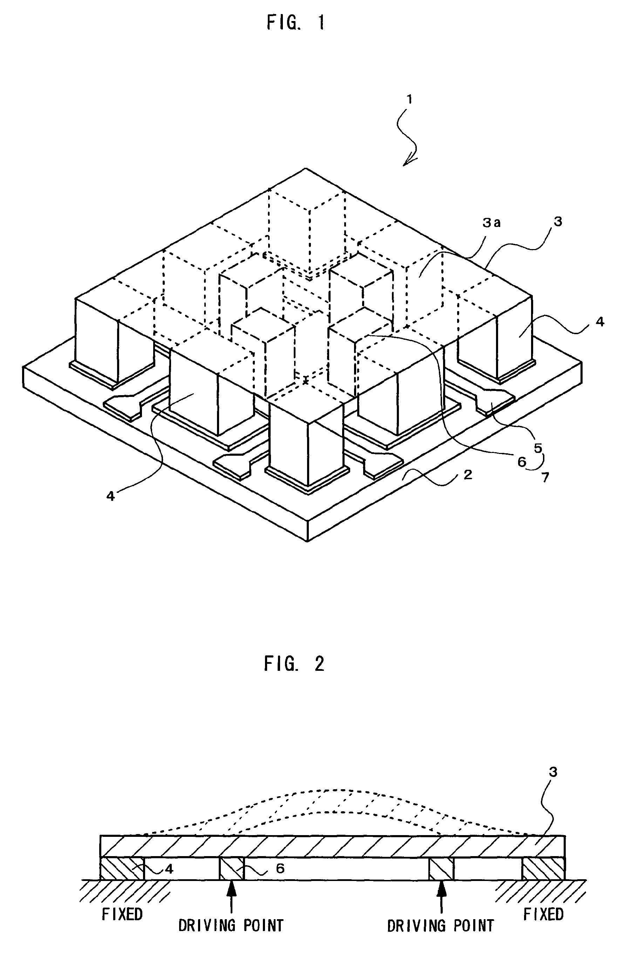

Fig. 1 is a perspective view of a variable shape mirror of the present embodiment. As shown in Fig. 1, the variable shape mirror 1 includes a base substrate 2, a mirror 3 with a mirror surface 3a, and a fixed part 4. The shape of the mirror 3 is changed with an actuator 7 including an electrode 5 and a piezoelectric body 6 shown with a chain dashed line.

The base substrate 2 has a substantially square shape, and is made of insulating body such as glass. A total of eight fixed parts 4 are arranged on the base substrate 2 at the four corners of the base substrate 2 and between the corners of the base substrate 2, where the base substrate 2 and the mirror 3 are fixed by the fixed part 4. Therefore, the ends of the mirror 3 are completely fixed to the base substrate 2, and the ends of the mirror 3 do not move up and down with respect to the base substrate 2. The mirror 3 has a mirror surface 3a on the side opposite to the fixed part 4, and reflects light with the mirror surface 3a.
Four piezoelectric bodies 6 shown with a chain dashed line are arranged so as to be sandwiched by the base substrate 2 and the mirror 3 on the inner side of the eight fixed parts 4, and the electrode 5 for applying the positive and negative voltage is connected to the piezoelectric body 6. The electrode 5 and the piezoelectric body 6 configure the actuator 7.

As shown in Fig. 2, since the ends of the mirror 3 are fixed, the shape of the mirror 3 changes as shown with a broken line in Fig. 2 by the drive force from the actuator 7 when the voltage applied to the electrode 5 is changed so that the piezoelectric body 6 is extended or contracted in the up and down direction. A piezoelectric ceramics is used for the piezoelectric body 6 of the actuator 7.

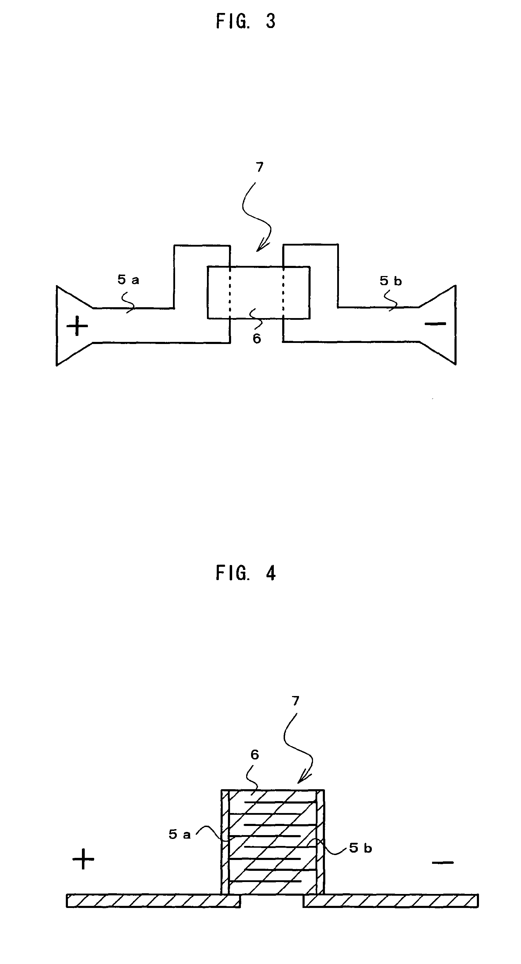

Fig. 3 is a top view of a stacked type piezoelectric ceramics actuator according to the present embodiment, and Fig. 4 is a cross sectional view of the stacked type piezoelectric ceramics actuator according to the present embodiment. As shown in Figs. 3 and 4, the actuator 7 includes the piezoelectric body 6, a positive electrode 5a, and a negative electrode 5b. In the stacked type piezoelectric ceramics actuator, a few dozen to a few hundred piezoelectric ceramics are used, and the positive electrode 5a and the negative electrode 5b are alternately embedded between the layers of the ceramics inside the piezoelectric body 6 as shown in Fig. 4.

The piezoelectric ceramics used for the piezoelectric body 6 is made of PZT (lead zirconate titanate: Pb(Zr, Ti)O₃). PZT is a ferroelectric substance having perovskite crystal structure for which general composition formula is expressed as ABO₃, and is widely used as piezoelectric material of the actuator 7.

The piezoelectric ceramics which can be used for the piezoelectric body 6 includes barium titanate (BaTiO₃) other than the PZT. Barium titanate also has a perovskite crystal structure. In addition, the piezoelectric ceramics having perovskite crystal structure includes lead titanate PbTiO₃, PLZT (lead lanthanum zirconate titanate: (Pb, La) (Zr, Ti) O₃) in which a small amount of La is added to PZT, and the like, any of which may be used as the piezoelectric body 6 of the actuator 7.

The piezoelectric body 6 used in such actuator 7 is a polycrystalline ferroelectric substance in which the piezoelectric ceramics is burnt and hardened at high temperature, and is given piezoelectricity by performing the polarization process. The piezoelectric body 6 has a positive piezoelectric effect for generating charges by applying force or strain to the crystal, and a reverse piezoelectric effect for generating force or strain by applying electric field. The actuator 7 uses the reverse piezoelectric effect and generates the drive force by arranging the electrode 5 on the piezoelectric body 6, applying electric field to the piezoelectric body 6, and changing the shape of the piezoelectric body 6.

The piezoelectric effect includes a vertical effect and a horizontal effect. In the vertical effect actuator, the displacement occurs parallel to the polarizing direction when electric field is applied in the polarizing direction. In the horizontal effect actuator, the displacement occurs perpendicularly to the polarizing direction when electric field is applied in the polarizing direction. For instance, in the stacked type piezoelectric ceramics actuator, a few dozen to a few hundred ceramics are used as described above, the electrode 5 is embedded between the layers of the ceramics, and the ceramics are alternately stacked so that polarization in the thickness direction becomes opposite. The piezoelectric vertical effect is used, so that the displacement occurs in the stacking direction with respect to the direction of the applied voltage.
The stacked type piezoelectric ceramics actuator has a relatively large displacement amount, and excels in accuracy, response speed, and drive force.

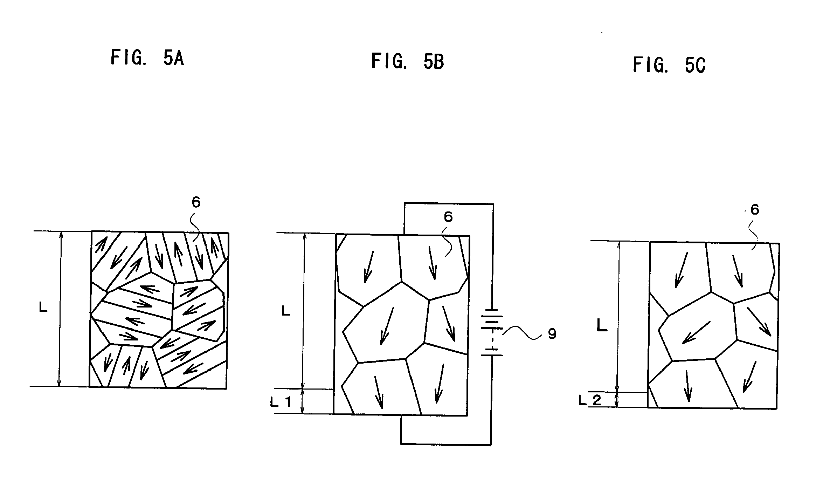

Fig. 5 is a view showing a polarization process of the piezoelectric ceramics. Fig. 5A shows a state before polarization of the piezoelectric ceramics, Fig. 5B shows a state during the polarization process of the piezoelectric ceramics, and Fig. 5C shows a state after the polarization process of the piezoelectric ceramics.
Before the polarization process, polarization (intrinsic polarization) of each crystal grain is directed in a random direction for every divided region as shown in Fig. 5A, and thus the polarization moment as a whole is zero. The height of the dielectric (piezoelectric body 6) in this state is L.
Thereafter, as shown in Fig. 5B, the polarization process is performed by applying strong DC electric field with a power supply 9 while heating the ceramics until the temperature reaches to the curie point.

As a result, the inner intrinsic polarization is aligned in a direction where the divided region is parallel to the electric field as shown in Fig. 5B. In this case, the piezoelectric body 6 extends in a direction of the applied electric field, and slightly contracts in a direction perpendicular to the electric field at normal temperature. Therefore, after the polarization process is performed, the electrostriction occurs in a direction of the applied electric field as shown in Fig. 5B under applying the electric field. The height of the electrostriction is L1.
Thereafter, when the electric field is removed, the state comes into Fig. 5C. Since PZT has ferroelectricity, the polarization moment still remains after the electric field is removed, and piezoelectric property is kept. The residual deformation occurs at this point. The height of the residual deformation is L2 (L1 > L2). Thus, the piezoelectric body 6 becomes higher than the state before the polarization process shown in Fig. 5A by L2 through the polarization process.

The polarization is performed after assembling the variable shape mirror 1. If a process that requires a temperature of higher than or equal to the curie point is performed after assembling the variable shape mirror 1, piezoelectricity disappears since the curie point is the critical temperature at which the piezoelectricity disappears. Thus, in the case where the temperature of process exceeded the curie point, the polarization process is performed after the assembly process of the variable shape mirror.
If the polarization process is performed after assembling the variable shape mirror 1, that is, after fixing the ends of the mirror 3 to the base substrate 2 with the fixed part 4, the height of the piezoelectric body 6 becomes higher than the height of the fixed part 4 by the residual strain of height L2.

When the residual strain is generated, the central part of the mirror 3 is projected upward from the beginning as shown in Fig. 2 to be in an upwardly convex state. In this case, the actuator 7 is also fixed to the base substrate 2 and the mirror 3.
In the state where the variable shape mirror 1 is convex upward, the light irradiated from the light source is not normally reflected by the mirror surface 3a of the mirror 3.

Thus, the method of applying voltage is modified as below.

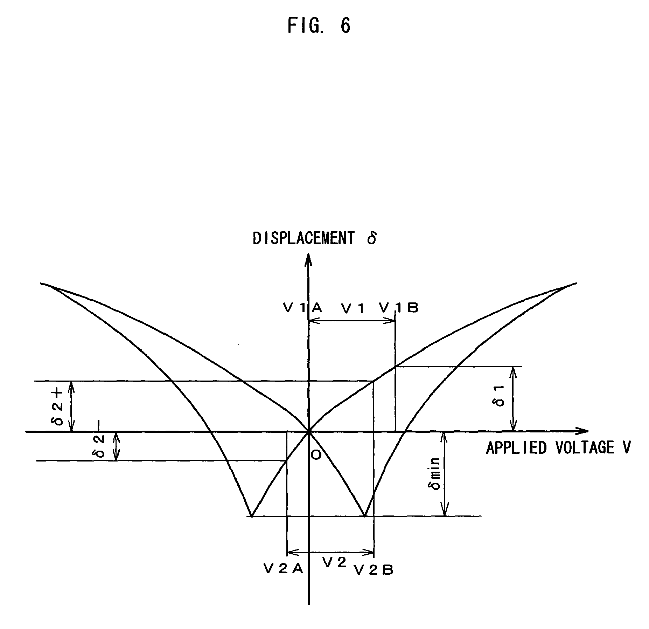

Fig. 6 is a view showing a method of applying voltage of the present embodiment. In the piezoelectric body 6 made of PZT, the relationship between the applied voltage V and the displacement δ shows a butterfly hysteresis as shown in Fig. 6.

The origin O shown in Fig. 6 is a state in which the applied voltage is zero and thus corresponds to the state of Fig. 5C, and is a state in which the residual strain after the polarization process is remaining.
Normally, the actuator 7 is used under conditions that the bias voltage is zero and the displacement is in the range of zero to δ1 by changing the applied voltage in the range of voltage stroke V1, that is from zero (V1A=0) to V1B. In the normal voltage stroke, the bias voltage is zero as described above, and the initial applied voltage is also zero.
Therefore, in the state of zero applied voltage, the displacement of the actuator 7 is also zero, but the height L2 of the residual strain actually remains since the polarization process is performed after the assembly process.

Therefore, the actuator 7 is extended by the height L2 of the residual strain than after the assembly process is terminated. Since the residual strain exists in the actuator 7 and the ends of the mirror 3 are fixed by the fixed part 4, the central part of the variable shape mirror 1 is projected upward from the beginning and is in the upwardly convex state.

Therefore, in the present embodiment, the negative bias voltage V2A is applied, and the initial voltage is set for V2A. In the initial state, the actuator 7 is thus contracted by δ2-.
Consequently, the state in which the variable shape mirror 1 in the initial state is upwardly convex due to the residual strain is reduced, and the planarity is enhanced.

The applied voltage V is changed with the negative bias voltage constantly applied, and the applied voltage is in a range from V2A to V2B. Therefore, the range of the voltage stroke is V2. The range where the actuator displaces is from displacement δ2- of contraction to displacement δ2+ of extension.
In this case, the initial voltage V2A differs between actuators. That is, in consideration of the shape of each actuator and variation in properties, the individual initial voltage is set for each actuator. If the initial voltage differs, the variation between the actuators reduces, and the planarity further enhances.

The displacement by the negative bias voltage V2A in this case should not exceed the minimum displacement δmin of the butterfly hysteresis of the actuator. If the displacement by the negative bias voltage V2A is in the range not exceeding the minimum displacement δmin, the relationship between the applied voltage and the displacement is substantially linear. The applied voltage is changed while applying the negative bias voltage. Therefore, the range V2 of the voltage stroke when the negative bias voltage is applied and the range V1 of the voltage stroke when the bias voltage is zero are the same. Due to the same range of the voltage stroke, it is possible that the stroke of the displacement while being applied with the negative bias voltage always becomes the displacement in a state where the residual strain is reduced. For instance, with reference to the displacement δ2+ at the maximum voltage V2B, the applied voltage V2B is smaller by the negative bias voltage than the maximum voltage V1B which is the voltage when the bias voltage is zero, and the displacement is of a state in which the residual strain is reduced, and thus the variable shape mirror 1 can be accurately operated.
If the voltage strokes are the same while applying the negative bias voltage, the range in which the relationship between the displacement and the applied voltage is substantially linear can be used, and the control of displacement can be facilitated.

The variable shape mirror 1 in which the residual strain is reduced is applicable, for example, to the aberration correction in an optical pickup device.

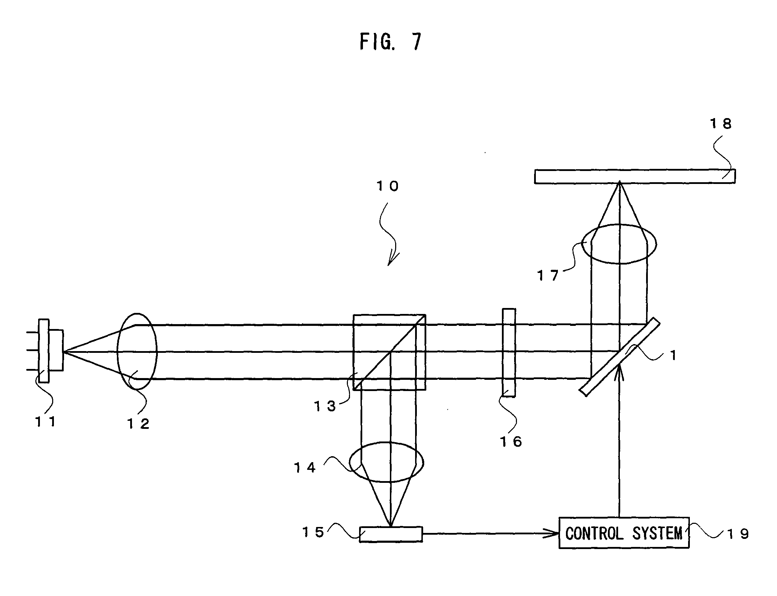

Fig. 7 is a view showing an optical pickup device using the variable shape mirror of the present embodiment. In Fig. 7, the optical system in which the variable shape mirror 1 of the present invention is used is mainly shown.
The optical pickup device 10 is used for recording and reproduction for the optical disc 18 such as CD (Compact Disc), DVD (Digital Versatile Disc), BD (Blu-ray Disc; registered trademark), and the like, where light is irradiated from a light source 11 to the optical disc 18 to perform reproduction and recording for the optical disc 18.

The light source 11 employs a semiconductor laser, which wavelength differs according to the type of optical disc 18 such as BD, DVD, and the like.
The laser light emitted from the light source 11 is converted to parallel light by a collimator lens 12, and entered to a beam splitter 13. The beam splitter 13 has a function of separating the laser light of forward path towards the optical disc 18 and the reflected light of backward path. The beam splitter 13 transmits the laser light of forward path while it does not transmit the light of backward path. A 1/4 wavelength plate 16 is used with the beam splitter 13, and makes 1/4 wavelength change in the phase between the polarized waves of the passing light and prevents the laser light of backward path from transmitting through the beam splitter 13.

The laser light transmitted through the 1/4 wavelength plate 16 is bent from horizontal direction to vertical direction by the variable shape mirror 1 serving as a raising mirror. The laser light bent to the vertical direction by the variable shape mirror 1 is collected by an objective lens 17, and entered to the optical disc 18.

The reflected light from the optical disc 18 follows the path opposite to the forward path, is bent towards a photodetector 15 by the beam splitter 13, collected by a light collecting lens 14, and received by the photodetector 15.

Thus, the variable shape mirror 1 serves as the raising mirror. Additionally, the variable shape mirror 1 transmits a control signal from the control system 19 to the actuator 7 of the variable shape mirror 1 based on the signal obtained in the photodetector 15, and changes the shape of the mirror 3 by means of the actuator 7. Thus, the wavefront aberration such as coma aberration generated when the optical disc 18 and the optical axis tilt can be corrected.
In the variable shape mirror 1 of the present embodiment, the strain of the mirror 3 in the initial state is reduced, and thus generation of wavefront aberration such as coma aberration in the initial state can be suppressed.
Since the applied voltage is changed while applying the negative bias, the generation of wavefront aberration such as coma aberration is reduced, and the aberration can be accurately corrected.

The present invention is not limited to the above embodiment. It should be apparent that the arrangement and the shape of the mirror 3, the fixed part 4, the electrode 5, the piezoelectric body 6, the actuator 7, and the like can be appropriately changed. Furthermore, although the stacked type piezoelectric actuator is used in the present embodiment, other types of actuators such as bimorph type and unimorph type can be used.
Regarding the optical pickup device 10 using the variable shape mirror 1, the optical pickup device 10 in which the arrangement of the light source 11, the beam splitter 13, etc. is changed, and in which components are added, changed, etc. according to the optical disc 18 may be used as long as the variable shape mirror 1 of the present invention is used.

## Claims

1. A variable shape mirror (1) comprising a base substrate (2); a mirror (3) with a mirror surface (3a); a fixed part (4), arranged on the base substrate (2), for fixing the mirror (3) and the base substrate (2); and an actuator (7) using a piezoelectric ceramics arranged between the base substrate (2) and the mirror (3); wherein
an initial voltage of the actuator is a negative voltage.

2. The variable shape mirror (1) according to claim 1, wherein the initial voltage differs for each actuator (7).

3. The variable shape mirror (1) according to claim 1 or 2, wherein the initial voltage is larger than or equal to a voltage at which a displacement of the actuator (7) becomes a minimum displacement and smaller than zero voltage.

4. The variable shape mirror (1) according to any one of claims 1 to 3, wherein the negative initial voltage is a bias voltage, and a voltage stroke is performed while applying the bias voltage.

5. A variable shape mirror (1) comprising a base substrate (2); a mirror (3) with a mirror surface (3a); a fixed part (4), arranged on the base substrate (2), for fixing the mirror (3) and the base substrate (2); and an actuator (7) using a piezoelectric ceramics arranged between the base substrate (2) and the mirror (3); wherein
PZT is used for the piezoelectric ceramics;
polarization of the PZT is performed after an assembly process of the variable shape mirror (1);
an initial voltage of the actuator (7) is a negative voltage;
the initial voltage differs for each actuator (7);
the initial voltage is larger than or equal to a voltage at which a displacement of the actuator (7) becomes minimum and smaller than zero voltage; and
the negative initial voltage is a bias voltage, and a voltage stroke is performed while applying the bias voltage.

6. An optical pickup device (10) comprising the variable shape mirror (1) according to any one of claims 1 to 5.
